# EUROPÄISCHE PATENTSCHRIFT

(11) **EP 3 580 101 B1**
(45) Veröffentlichungstag und Bekanntmachung des Hinweises auf die Patenterteilung: **27.09.2023**
(21) Anmeldenummer: 18702423.7
(22) Anmeldetag: 17.01.2018
(51) Int. Cl.: B60T 8/88, B60T 13/74

(54) **BREMSMOTOR-STEUERGERÄT, BREMSSYSTEM FÜR EIN FAHRZEUG MIT EINEM ELEKTRISCHEN BREMSMOTOR UND VERFAHREN ZUR ANSTEUERUNG DES BREMSMOTORSTEUERGERÄTS**
BRAKE-MOTOR CONTROL UNIT, BRAKING SYSTEM FOR A VEHICLE HAVING AN ELECTRIC BRAKE MOTOR, AND METHOD FOR THE CONTROL OF THE BRAKE-MOTOR CONTROL UNIT
APPAREIL DE COMMANDE DE MOTEUR FREIN, SYSTÈME DE FREINAGE POUR VÉHICULE ÉQUIPÉ D'UN MOTEUR FREIN ÉLECTRIQUE ET PROCÉDÉ DE COMMANDE DE L'APPAREIL DE COMMANDE DE MOTEUR FREIN

(30) Priorität: 08.02.2017 DE 102017201982
(43) Veröffentlichungstag der Anmeldung: 18.12.2019
(73) Patentinhaber: Robert Bosch GmbH, 70442 Stuttgart (DE)
(72) Erfinder: REBHOLZ-GOLDMANN, Peter, Yokohama-Shi 224-8501 (JP); ZECHMEISTER, Steffen, 74078 Heilbronn (DE); FRENZEL, Toni, 74081 Heilbronn (DE)
(86) Internationale Anmeldenummer: PCT/EP2018/051092
(87) Internationale Veröffentlichungsnummer: WO 2018/145869

(56) Entgegenhaltungen:
- EP-A1- 1 418 103
- EP-A2- 1 964 741
- WO-A1-00/68053
- WO-A1-2007/009826
- DE-A1-102008 033 309
- DE-A1-102015 200 928

## Beschreibung

Die Erfindung bezieht sich auf ein Bremsmotor-Steuergerät und auf ein Bremssystem für ein Fahrzeug mit einer elektromechanischen Bremsvorrichtung, die eine Bremseinheit mit einem elektrischen Bremsmotor aufweist.

### Stand der Technik

In der DE 10 2008 033 309 A1 wird eine Feststellbremsanlage mit zwei elektromechanischen Aktuatoren beschrieben, bei deren Betätigung eine das Fahrzeug im Stillstand festsetzende Bremskraft erzeugt wird. Zusätzlich zu den Aktuatoren zugeordneten Radansteuerungseinheiten umfasst die Feststellbremsanlage eine weitere Steuereinheit, über die der Fahrerwunsch erfasst wird. Da jedem Aktuator jeweils eine Radansteuerungseinheit zugeordnet ist, kann auch bei einem Ausfall einer Radansteuerungseinheit die noch intakte Radansteuerungseinheit ihre Funktion ausführen und über den zugeordneten Aktuator eine Parkbremskraft erzeugen.

Aus der DE 10 2015 200 928 A1 ist ein Bremssystem für ein Kraftfahrzeug mit einer Betriebsbremse und einer elektrischen Parkbremse bekannt. Der Betriebsbremse und der Parkbremse ist jeweils ein Steuergerät zugeordnet, wobei es sich bei dem Steuergerät der Betriebsbremse um ein Steuergerät eines elektronischen Stabilitätsprogrammes handelt.

Aus der EP 1 418 103 A1 ist ferner ein Bremsmotor-Steuergerät zur Ansteuerung eines elektrischen Bremsmotors einer elektromechanischen Bremsvorrichtung bekannt. Das Bremsmotor-Steuergerät umfasst eine Schnittstelle zur Kommunikation mit einem weiteren Steuergerät.

Die DE 10 2015 200 928 A1 offenbart ein Bremsmotor-Steuergerät zur Ansteuerung eines elektrischen Bremsmotors einer elektromechanischen Bremsvorrichtung, die als Parkbremse eingesetzt wird. Das in dieser Druckschrift beschriebene Bremssystem weist außerdem ein ESP-Steuergerät auf, wobei das Bremsmotor-Steuergerät in das ESP-Steuergerät integriert ist. Das Bremsmotor-Steuergerät wird im Notfall zum Betreiben des gesamten Bremssystems genutzt.

### Offenbarung der Erfindung

Das erfindungsgemäße Bremsmotor-Steuergerät, wie in dem beigefügten unabhängigen Anspruch 1 definiert, kann zur Ansteuerung eines elektrischen Bremsmotors in Fahrzeugen eingesetzt werden, der Teil einer elektromechanischen Bremsvorrichtung in einem Bremssystem für das Fahrzeug ist. Die elektromechanische Bremsvorrichtung wird insbesondere als Park- bzw. Feststellbremse zum Festsetzen des Fahrzeugs im Stillstand eingesetzt.

Der elektrische Bremsmotor ist vorteilhafterweise in eine Radbremseinrichtung integriert und verstellt einen Bremskolben gegen eine Bremsscheibe. Bei der Radbremseinrichtung handelt es sich vorzugsweise um die Radbremseinrichtung der hydraulischen Fahrzeugbremse im Fahrzeug, so dass der Bremskolben in der Radbremseinrichtung sowohl von dem hydraulischen Bremsfluid der hydraulischen Fahrzeugbremse als auch gleichzeitig oder zeitlich versetzt und unabhängig voneinander von dem elektrischen Bremsmotor in Richtung auf die Bremsscheibe verstellt werden kann.

In bevorzugter Ausführung umfasst die elektromechanische Bremsvorrichtung jeweils einen elektrischen Bremsmotor an den beiden Radbremseinrichtungen links und rechts an der Hinterachse des Fahrzeuges. Den beiden elektrischen Bremsmotoren ist vorzugsweise ein gemeinsames Bremsmotor-Steuergerät zugeordnet.

Das Bremsmotor-Steuergerät erzeugt Ansteuersignale zur Ansteuerung des zugeordneten elektrischen Bremsmotors. Je nach Ansteuerung wird der elektrische Bremsmotor zugespannt, um den Bremskolben gegen die Bremsscheibe zu drücken und eine elektromechanische Bremskraft zu erzeugen, oder in entgegengesetzte Richtung in Löserichtung verstellt, um die Zuspann-Bremskraft abzubauen und den Bremskolben in Richtung einer Ausgangsposition zu verstellen, in der keine elektromechanische Bremskraft wirksam ist.

Das Bremsmotor-Steuergerät ist des Weiteren mit einer Anschlusseinheit versehen, die es erlaubt, ein Zusatzsteuergerät anzuschließen, welches im Fehlerfall des Bremsmotor-Steuergeräts, insbesondere eines Mikrocontrollers des Bremsmotor-Steuergeräts oder einer Standard-Treibereinheit, die Ansteuerung des elektrischen Bremsmotors übernimmt. Über das Zusatzsteuergerät ist somit sichergestellt, dass über den elektrischen Bremsmotor auch dann eine elektromechanische Bremskraft erzeugt werden kann, wenn das Bremsmotor-Steuergerät ganz oder teilweise ausfällt. Die Anschlusseinheit im Bremsmotor-Steuergerät ermöglicht eine redundante Auslegung der Ansteuerung des elektrischen Bremsmotors.

Als Zusatzsteuergerät kommt insbesondere ein Steuergerät einer zusätzlichen Bremsvorrichtung oder Bremseinheit des Bremssystems in Betracht, beispielsweise das Steuergerät für einen Aktor der hydraulischen Fahrzeugbremse. Das Zusatzsteuergerät übernimmt in seiner Hauptfunktion die Ansteuerung des Aktors in der hydraulischen Fahrzeugbremse und in seiner Zusatzfunktion die Ansteuerung des elektrischen Bremsmotors für den Fall eines Fehlers im Bremsmotor-Steuergerät.

Es handelt sich bei dem Bremsmotor-Steuergerät um ein ESP-Steuergerät (Elektronisches Stabilitätsprogramm), mit dem in der Hauptfunktion eine Hydraulikpumpe des ESP-Systems sowie Ventile in der hydraulischen Fahrzeugbremse angesteuert werden. Das ESP-Steuergerät übernimmt als Zusatzfunktion die Ansteuerung des elektrischen Bremsmotors. Diese Zusatzfunktion kann im ESP-Steuergerät im Fehlerfall über die Anschlusseinheit und das an die Anschlusseinheit angedockte Zusatzsteuergerät durchgeführt werden.

Sofern mehrere elektrische Bremsmotoren im Bremssystem vorhanden sind, können diese vorteilhafterweise jeweils über eine Anschlusseinheit im ESP-Steuergerät angesteuert werden, wobei an jede Anschlusseinheit bevorzugt das gleiche Zusatzsteuergerät angeschlossen ist. Gegebenenfalls ist es auch möglich, dass nur eine Anschlusseinheit zum Anschluss des Zusatzsteuergeräts vorgesehen ist und über die eine Anschlusseinheit beide Bremsmotoren angesteuert werden.

Gemäß einer weiteren vorteilhaften Ausführung ist ein Mikrocontroller des Bremsmotor-Steuergeräts, der dem elektrischen Bremsmotor zugeordnet ist, über eine Freigabeleitung mit der Anschlusseinheit verbunden. Über die Freigabe der Leitung wird im Fehlerfall die Anschlusseinheit im Bremsmotor-Steuergerät, an die das Zusatzsteuergerät angeschlossen ist, freigegeben. Die Freigabe erfolgt entweder für den Fall, dass eine Standard-Treibereinheit des elektrischen Bremsmotors nicht mehr verfügbar ist oder dass die Systemverfügbarkeit des Bremsmotor-Steuergerätes zu einer Nichtverfügbarkeit degradiert worden ist. In diesem Fall kann die Ansteuerung des elektrischen Bremsmotors über die freigegebene Anschlusseinheit und das Zusatzsteuergerät übernommen werden.

Die Anschlusseinheit umfasst vorteilhafterweise eine Backup-Treibereinheit und eine Logikeinheit mit der Ansteuerungslogik. Gegebenenfalls kann die Anschlusseinheit noch eine Strommesseinheit zur Ermittlung des Motorstroms und/oder eine Erkennungseinheit zum Erfassen des Schaltzustandes eines Betätigungsschalters aufweisen, über den die elektromechanische Bremsvorrichtung vom Fahrer manuell steuerbar ist.

Bei einem festgestellten Fehler im Bremsmotor-Steuergerät, insbesondere im Mikrocontroller des Bremsmotor-Steuergeräts oder in der Standard-Treibereinheit, wird die Backup-Treibereinheit freigeschaltet und durch Signale des Zusatzsteuergerätes angesteuert. Die Logikeinheit mit der Ansteuerungslogik in der Anschlusseinheit für den elektrischen Bremsmotor kann über die Backup-Treibereinheit angesteuert werden. Die Kontrolle der Ansteuerung des elektrischen Bremsmotors erfolgt gegebenenfalls über die Auswertung des in der Strommesseinheit in der Anschlusseinheit ermittelten Motorstroms des elektrischen Bremsmotors.

Die Anschlusseinheit des Bremsmotor-Steuergerätes weist vorteilhafterweise eine Schnittstelle zum Anschließen des Zusatzsteuergerätes auf. Die Schnittstelle ist entweder als Steckerverbindung und/oder als Netzwerkverbindung, beispielsweise LIN-Bus ausgeführt. Über die Schnittstelle werden Signale des Zusatzsteuergerätes im Bremsmotor-Steuergerät eingelesen, insbesondere Signale zur Ansteuerrichtung des Bremsmotors (Zuspannrichtung oder Löserichtung) und ein Aktuierungssignal, mit dem die Ansteuerung des Bremsmotors ausgelöst wird.

Gemäß einer weiteren vorteilhaften Ausführung ist die Anschlusseinheit über einen oder mehrere Schalter bzw. Verbindungseinheiten, die zwischen der Standard-Treibereinheit und einer Leistungselektronik des Bremsmotors angeordnet sind, angeschlossen. Der Anschluss erfolgt über einen Aktuierungspfad mit mehreren Verbindungsleitungen, welche jeweils zur Ansteuerung des linken und des rechten Bremsmotors dienen. Die Leistungselektronik des Bremsmotors umfasst beispielhaft H-Brücken zur Ansteuerung der elektrischen Bremsmotoren.

Das erfindungsgemäße Bremssystem für ein Fahrzeug weist eine elektromechanische Bremsvorrichtung mit einer oder mehreren Radbremseinrichtungen auf, die mit einem elektrischen Bremsmotor versehen sind, welche einen Bremskolben gegen eine Bremsscheibe verstellt. Das Bremssystem umfasst das vorbeschriebene Bremsmotor-Steuergerät zur Ansteuerung des elektrischen Bremsmotors, wobei das Bremsmotor-Steuergerät mit einer Anschlusseinheit für den Anschluss eines Zusatzsteuergerätes ausgestattet ist. Dementsprechend kann im Fehlerfall des Bremsmotor-Steuergerätes die Ansteuerung des elektrischen Bremsmotors oder der elektrischen Bremsmotoren im Fehlerfall über das Zusatzsteuergerät übernommen werden.

Das Bremssystem weist insgesamt vorteilhafterweise zwei elektrische Bremsmotoren auf, insbesondere in den Radbremseinrichtungen am linken und rechten Hinterrad des Fahrzeugs, wobei die elektromechanische Bremsvorrichtung als Feststell- bzw. Parkbremse eingesetzt werden kann. Die beiden elektrischen Bremsmotoren werden vorzugsweise über ein gemeinsames Bremsmotor-Steuergerät angesteuert. Die Funktion des Zusatzsteuergerätes wird vorteilhafterweise von einem Steuergerät übernommen, das als Hauptfunktion einen Aktor der hydraulischen Fahrzeugbremse im Fahrzeug ansteuert, beispielsweise einen elektrischen Bremskraftverstärker.

Weitere Vorteile und zweckmäßige Ausführungen sind den weiteren Ansprüchen, der Figurenbeschreibung und den Zeichnungen zu entnehmen. Es zeigen:
- Fig. 1: eine schematische Darstellung einer hydraulischen Fahrzeugbremse mit einem Bremskraftverstärker, wobei die Radbremseinrichtungen der Fahrzeugbremse an der Fahrzeughinterachse zusätzlich mit einer elektromechanischen Bremsvorrichtung mit einem elektrischen Bremsmotor ausgestattet sind,
- Fig. 2: einen Schnitt durch eine elektromechanische Bremsvorrichtung mit einem elektrischen Bremsmotor,
- Fig. 3: ein ESP-Steuergerät, das auch die elektromechanische Bremsvorrichtung ansteuert und eine Schnittstelle für ein Zusatzsteuergerät aufweist.

In den Figuren sind gleiche Bauteile mit gleichen Bezugszeichen versehen.

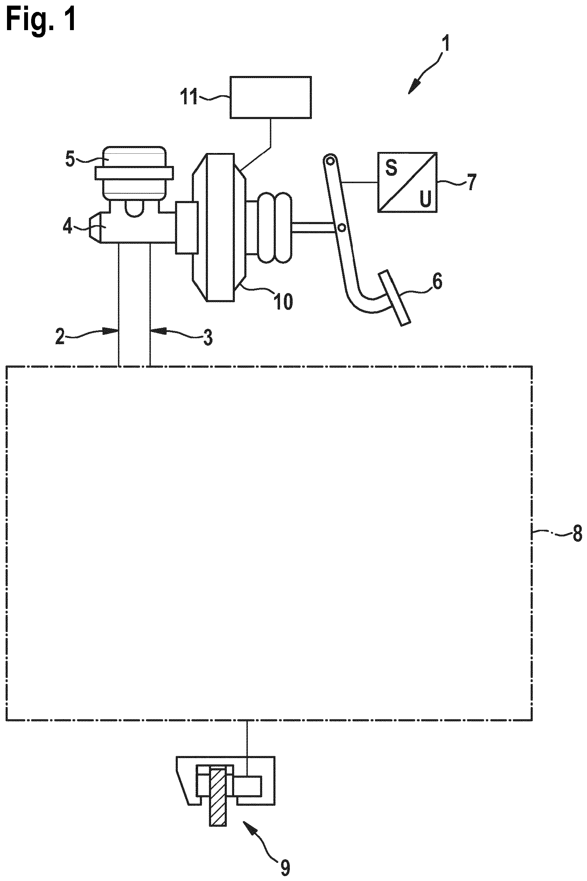

Die in Fig. 1 dargestellte hydraulische Fahrzeugbremse 1 für ein Fahrzeug umfasst einen Vorderachs-Bremskreis 2 und einen Hinterachs-Bremskreis 3 zur Versorgung und Ansteuerung von Radbremseinrichtungen 9 an jedem Rad des Fahrzeugs mit einem unter Hydraulikdruck stehenden Bremsfluid. Die Bremskreise können auch als zwei Diagonalbremskreise mit jeweils einem Vorderrad und einem diagonal dazu angeordneten Hinterrad ausgebildet sein.

Die beiden Bremskreise 2, 3 sind an einen gemeinsamen Hauptbremszylinder 4 angeschlossen, der über einen Bremsflüssigkeitsvorratsbehälter 5 mit Bremsfluid versorgt wird. Der Hauptbremszylinderkolben innerhalb des Hauptbremszylinders 4 wird vom Fahrer über das Bremspedal 6 betätigt, der vom Fahrer ausgeübte Pedalweg wird über einen Pedalwegsensor 7 gemessen. Zwischen dem Bremspedal 6 und dem Hauptbremszylinder 4 befindet sich ein elektrischer Bremskraftverstärker 10, der beispielsweise einen Elektromotor umfasst, welcher bevorzugt über ein Getriebe den Hauptbremszylinder 4 betätigt (iBooster). Der Bremskraftverstärker 10 stellt eine aktive Bremskomponente zur Beeinflussung des hydraulischen Bremsdrucks dar.

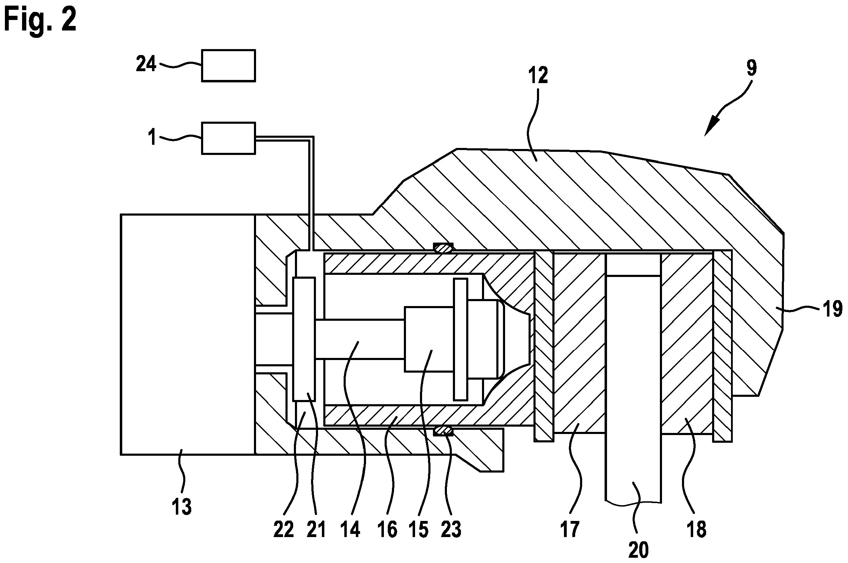

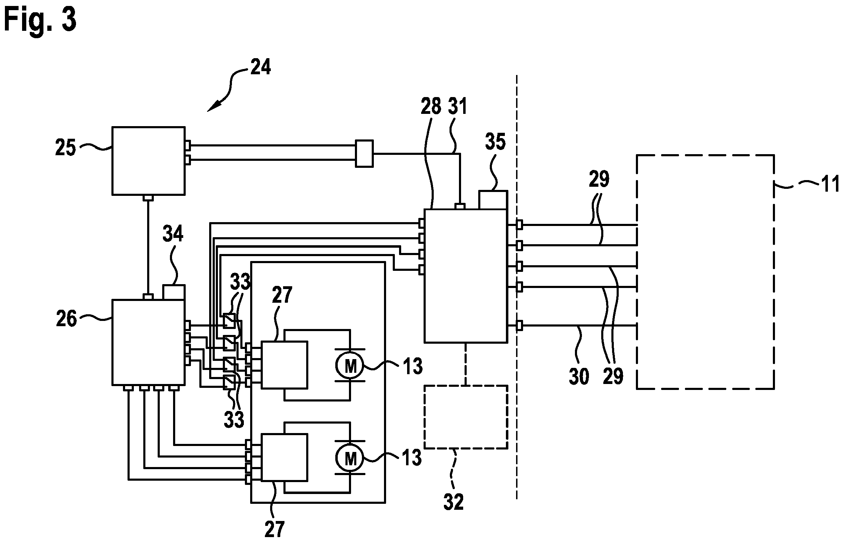

Die vom Pedalwegsensor 7 gemessene Stellbewegung des Bremspedals 6 wird als Sensorsignal an ein Steuergerät 11 des Bremssystems übermittelt, in welchem Stellsignale zur Ansteuerung des Bremskraftverstärkers 10 erzeugt werden. Die Versorgung der Radbremseinrichtungen 9 mit Bremsfluid erfolgt in jedem Bremskreis 2, 3 über verschiedene Schaltventile, die gemeinsam mit weiteren Aggregaten Teil einer Bremshydraulik 8 sind. Zur Bremshydraulik 8 gehört des Weiteren eine Hydraulikpumpe, die Bestandteil eines elektronischen Stabilitätsprogramms (ESP) ist. Auch die Hydraulikpumpe ist eine aktive Bremskomponente zur Beeinflussung des hydraulischen Bremsdrucks. Die einstellbaren Komponenten des elektronischen Stabilitätsprogramms - Ventile und die Hydraulikpumpe - werden von einem ESP-Steuergerät 24 (Fig. 2, 3) angesteuert.

In Fig. 2 ist die Radbremseinrichtung 9, die an einem Rad an der Hinterachse des Fahrzeugs angeordnet ist, im Detail dargestellt. Die Radbremseinrichtung 9 ist Teil der hydraulischen Fahrzeugbremse 1 und wird aus dem Hinterachs-Bremskreis mit Bremsfluid 22 versorgt. Die Radbremseinrichtung 9 weist außerdem eine elektromechanische Bremsvorrichtung auf, die bevorzugt als Feststellbremse zum Festsetzen eines Fahrzeugs im Stillstand eingesetzt wird, jedoch auch bei einer Bewegung des Fahrzeugs, insbesondere bei kleineren Fahrzeuggeschwindigkeiten unterhalb eines Geschwindigkeits-Grenzwerts zum Abbremsen des Fahrzeugs eingesetzt werden kann.

Die elektromechanische Bremsvorrichtung umfasst einen Bremssattel 12 mit einer Zange 19, welche eine Bremsscheibe 20 übergreift. Als Stellglied weist die Bremsvorrichtung eine Motor-Getriebe-Einheit mit einem Gleichstrom-Elektromotor als Bremsmotor 13 auf, dessen Rotorwelle eine Spindel 14 rotierend antreibt, auf der eine Spindelmutter 15 rotationsfest gelagert ist. Bei einer Rotation der Spindel 14 wird die Spindelmutter 15 axial verstellt. Die Spindelmutter 15 bewegt sich innerhalb eines Bremskolbens 16, der Träger eines Bremsbelags 17 ist, welcher von dem Bremskolben 16 gegen die Bremsscheibe 20 gedrückt wird. Auf der gegenüberliegenden Seite der Bremsscheibe 20 befindet sich ein weiterer Bremsbelag 18, der ortsfest an der Zange 19 gehalten ist. Der Bremskolben 16 ist auf seiner Außenseite über einen umgreifenden Dichtring 23 druckdicht gegenüber dem aufnehmenden Gehäuse abgedichtet.

Innerhalb des Bremskolbens 16 kann sich die Spindelmutter 15 bei einer Drehbewegung der Spindel 14 axial nach vorne in Richtung auf die Bremsscheibe 20 zu bzw. bei einer entgegen gesetzten Drehbewegung der Spindel 14 axial nach hinten bis zum Erreichen eines Endanschlags 21 bewegen. Zum Erzeugen einer Klemmkraft beaufschlagt die Spindelmutter 15 die innere Stirnseite des Bremskolbens 16, wodurch der axial verschiebbar in der Bremsvorrichtung gelagerte Bremskolben 16 mit dem Bremsbelag 17 gegen die zugewandte Stirnfläche der Bremsscheibe 20 gedrückt wird. Die Spindelmutter 15 stellt ein Übertragungsglied zwischen dem Bremsmotor und dem Bremskolben dar.

Für die hydraulische Bremskraft wirkt auf den Bremskolben 16 der hydraulische Druck des Bremsfluids 22 aus der hydraulischen Fahrzeugbremse 1. Der hydraulische Druck kann auch im Fahrzeugstillstand bei Betätigung der elektromechanischen Bremsvorrichtung unterstützend wirksam sein, so dass sich die Gesamt-Bremskraft aus dem elektromotorisch gestellten Anteil und dem hydraulischen Anteil zusammensetzt. Während der Fahrt des Fahrzeugs ist entweder nur die hydraulische Fahrzeugbremse aktiv oder sowohl die hydraulische Fahrzeugbremse als auch die elektromechanische Bremsvorrichtung oder nur die elektromechanische Bremsvorrichtung, um Bremskraft zu erzeugen. Die Stellsignale zur Ansteuerung sowohl der einstellbaren Komponenten der hydraulischen Fahrzeugbremse 1 als auch der elektromechanischen Radbremseinrichtung 9 werden in dem ESP-Steuergerät 24 erzeugt.

In Fig. 3 ist das ESP-Steuergerät 24 dargestellt, das zusätzlich zur Ansteuerung der Komponenten des elektronischen Stabilitätsprogramms auch die elektrischen Bremsmotoren 13 der elektromechanischen Bremsvorrichtung ansteuert. Das ESP-Steuergerät 24 umfasst einen Mikrocontroller 25, der mit einer Standard-Treibereinheit 26 für die Aktuierung der beiden elektrischen Bremsmotoren 13 an den Radbremseinheiten am linken und rechten Hinterrad des Fahrzeugs verbunden ist. Die Standard-Treibereinheit 26 beaufschlagt als elektronische Komponenten die H-Brücken 27 zur Ansteuerung der elektrischen Bremsmotoren 13.

Das Steuergerät 24 ist mit einer Anschlusseinheit 28 versehen, die eine Schnittstelle zum Anschließen eines Zusatzsteuergerätes 11 darstellt, mit dem im Falle eines Fehlers im ESP-Steuergerät 24 die Ansteuerung eines oder beider elektrischen Bremsmotoren 13 erfolgt. Bei dem Zusatzsteuergerät 11 handelt es sich insbesondere um das Steuergerät 11 für den elektrischen Bremskraftverstärker 10 (Fig. 1). Der Anschluss des Zusatzsteuergerätes 11 an die Anschlusseinheit 28 erfolgt entweder über Steckerverbindungen 29 und/oder über eine Netzwerkverbindung 30.

Die Anschlusseinheit 28 kommuniziert über eine Freigabeleitung 31 mit dem Mikrocontroller 25. Hierdurch ist der Mikrocontroller 25 in der Lage, im Fehlerfall die Anschlusseinheit 28 und eine darin enthaltene Backup-Treibereinheit freizugeben. Neben der Backup-Treibereinheit umfasst die Anschlusseinheit 28 eine Logikeinheit zur Erstellung von Ansteuersignalen. Des Weiteren kann die Anschlusseinheit 28 mit einer Strommesseinheit zur Ermittlung des Bremsmotorstroms und einer Erkennungseinheit 32 versehen sein bzw. mit Erkennungseinheit 32 kommunizieren, mit der der Schaltzustand eines Betätigungsschalters erfasst wird, über den die elektromechanische Bremsvorrichtung vom Fahrer manuell gesteuert werden kann.

Die Anschlusseinheit 28 ist an Schalter bzw. Verbindungseinheiten 33 angeschlossen, die zwischen der Standard-Treibereinheit 26 und den H-Brücken 27 eines Bremsmotors 13 angeordnet sind. Die Verbindungseinheiten 33 ermöglichen es, im Fehlerfall die H-Brücken 27 und den zugeordneten Bremsmotor 13 von der Standard-Treibereinheit 26 abzukoppeln und stattdessen die Anschlusseinheit 28 anzukoppeln und die H-Brücken 27 und den zugeordneten Bremsmotor 13 von dem Steuergerät 11 steuern zu lassen.

Die Standard-Treibereinheit 26 und die Anschlusseinheit 28 können mit einer Ladungspumpe 34, 35 versehen sein, um die H-Brücken 27 mit den erforderlichen Spannungspegeln zu betreiben.

## Patentansprüche

1. Bremsmotor-Steuergerät zur Ansteuerung eines elektrischen Bremsmotors (13) einer elektromechanischen Bremsvorrichtung, die insbesondere als Park- bzw. Feststellbremse in einem Bremssystem für ein Fahrzeug einsetzbar ist, wobei der elektrische Bremsmotor (13) einen Bremskolben (16) gegen eine Bremsscheibe (20) verstellt, **dadurch gekennzeichnet, dass** das Bremsmotor-Steuergerät (24) ein ESP-Steuergerät ist und das Bremsmotor-Steuergerät (24) eine Anschlusseinheit (28) aufweist, an die ein Zusatzsteuergerät (11) zur Ansteuerung des elektrischen Bremsmotors (13) im Fehlerfall des Bremsmotor-Steuergeräts (24) anschließbar ist.

2. Bremsmotor-Steuergerät nach Anspruch 1, **dadurch gekennzeichnet, dass** ein Mikrocontroller (25) des Bremsmotor-Steuergeräts (24) über eine Freigabeleitung (31) mit der Anschlusseinheit (28) zur Freigabe der Anschlusseinheit (28) im Fehlerfall verbunden ist.

3. Bremsmotor-Steuergerät nach einem der Ansprüche 1 bis 2, **dadurch gekennzeichnet, dass** die Anschlusseinheit (28) eine Strommesseinheit aufweist.

4. Bremsmotor-Steuergerät nach einem der Ansprüche 1 bis 3, **dadurch gekennzeichnet, dass** die Anschlusseinheit (28) eine Erkennungseinheit (32) zum Erfassen des Schaltzustandes eines Betätigungsschalters aufweist, über den die elektromechanische Bremsvorrichtung steuerbar ist.

5. Bremsmotor-Steuergerät nach einem der Ansprüche 1 bis 4, **dadurch gekennzeichnet, dass** die Anschlusseinheit (28) über einen oder mehrere Verbindungseinheiten (33), die zwischen einer Standard-Treibereinheit (26) und einer Leistungselektronik (27) des Bremsmotors (13) angeordnet sind, angeschlossen ist.

6. Bremssystem für ein Fahrzeug mit einer elektromechanischen Bremsvorrichtung, die insbesondere als Park- bzw. Feststellbremse einsetzbar ist, wobei das Bremssystem eine Radbremseinrichtung (9) mit einem elektrischen Bremsmotor (13) aufweist, der einen Bremskolben (16) gegen eine Bremsscheibe (20) verstellt, und mit einem Bremsmotor-Steuergerät (24) zur Ansteuerung des elektrischen Bremsmotors (13) nach einem der Ansprüche 1 bis 5, **dadurch gekennzeichnet, dass** an die Anschlusseinheit (28) des Bremsmotor-Steuergeräts (24) ein Zusatzsteuergerät (11) zur Ansteuerung des elektrischen Bremsmotors (13) im Fehlerfall des Bremsmotor-Steuergeräts (24) angeschlossen ist.

7. Bremssystem nach Anspruch 6, **dadurch gekennzeichnet, dass** das Zusatzsteuergerät (11) einer zusätzlichen Bremsvorrichtung oder Bremseinheit des Bremssystems zugeordnet ist und das Zusatzsteuergerät (11) als Ergänzungsfunktion die Ansteuerung des elektrischen Bremsmotors (13) im Fehlerfall des Bremsmotor-Steuergeräts (24) übernimmt.

8. Bremssystem nach Anspruch 7, **dadurch gekennzeichnet, dass** das Zusatzsteuergerät (11) als Hauptfunktion einen Aktor (10) der hydraulischen Fahrzeugbremse (1) ansteuert.

9. Bremssystem nach Anspruch 8, **dadurch gekennzeichnet, dass** das Zusatzsteuergerät (11) als Hauptfunktion einen elektrischen Bremskraftverstärker (10) der hydraulischen Fahrzeugbremse (1) ansteuert.

10. Bremssystem nach einem der Ansprüche 6 bis 9, **dadurch gekennzeichnet,**
**dass** die elektromechanische Bremsvorrichtung zwei Bremseinheiten mit jeweils einem elektrischen Bremsmotor (13) und einem gemeinsamen Bremsmotor-Steuergerät (24) aufweist, wobei über die Anschlusseinheit (28) im Bremsmotor-Steuergerät (24) das Zusatzsteuergerät (11) zur Ansteuerung des elektrischen Bremsmotors (13) im Fehlerfall des Bremsmotor-Steuergeräts (24) angeschlossen ist.

11. Bremssystem nach einem der Ansprüche 6 bis 10, **dadurch gekennzeichnet, dass** das Zusatzsteuergerät (11) über Steckerverbindungen (29) mit der Anschlusseinheit (28) des Bremsmotor-Steuergeräts (24) verbunden ist.

12. Bremssystem nach einem der Ansprüche 6 bis 11, **dadurch gekennzeichnet, dass** das Zusatzsteuergerät (11) über eine Netzwerkverbindung (30) mit der Anschlusseinheit (28) des Bremsmotor-Steuergeräts (24) verbunden ist.

13. Verfahren zur Ansteuerung eines Bremsmotor-Steuergeräts nach einem der Ansprüche 1 bis 5, bei dem im Fehlerfall des Bremsmotor-Steuergeräts (24), insbesondere eines Fehlers in einem Mikrocontroller (25) des Bremsmotor-Steuergeräts (24) oder einer Standard-Treibereinheit (26), ein an eine Anschlusseinheit (28) des Bremsmotor-Steuergeräts (24) angeschlossenes Zusatzsteuergerät (11) die Ansteuerung eines elektrischen Bremsmotors (13) übernimmt.

14. Verfahren nach Anspruch 13, **dadurch gekennzeichnet, dass** in einer Strommesseinheit der Anschlusseinheit (28) der Bremsmotorstrom ermittelt wird.

15. Verfahren nach Anspruch 13 oder 14, **dadurch gekennzeichnet, dass** in einer mit der der Anschlusseinheit (28) kommunizierenden Erkennungseinheit (32) der Schaltzustand eines Betätigungsschalters erfasst wird, über den die elektromechanische Bremsvorrichtung vom Fahrer manuell gesteuert werden kann.

## Claims

1. Brake motor control device for the control of an electric brake motor (13) of an electromechanical braking device that can be used in particular as a parking or holding brake in a braking system for a vehicle, wherein the electric brake motor (13) displaces a brake piston (16) against a brake disc (20), **characterized in that** the brake motor control device (24) is an ESP control unit and the brake motor control device (24) comprises a connection unit (28) to which an auxiliary control unit (11) for controlling the electric brake motor (13) in the event of a fault of the brake motor control device (24) can be connected.

2. Brake motor control device according to Claim 1, **characterized in that** a microcontroller (25) of the brake motor control device (24) is connected via an enabling line (31) to the connection unit (28) for enabling the connection unit (28) in the event of a fault.

3. Brake motor control device according to either of Claims 1 and 2, **characterized in that** the connection unit (28) comprises a current measuring unit.

4. Brake motor control device according to one of Claims 1 to 3, **characterized in that** the connection unit (28) comprises a detection unit (32) for detecting the switching state of an actuating switch, by means of which the electromechanical braking device can be controlled.

5. Brake motor control device according to one of Claims 1 to 4, **characterized in that** the connection unit (28) is connected via one or more connection units (33) that are disposed between a standard driver unit (26) and power electronics (27) of the brake motor (13).

6. Braking system for a vehicle with an electromechanical braking device that can be used in particular as a parking or holding brake, wherein the braking system comprises a wheel braking device (9) with an electric brake motor (13) that displaces a brake piston (16) against a brake disc (20) and with a brake motor control device (24) for controlling the electric brake motor (13) according to one of Claims 1 to 5, **characterized in that** an auxiliary control unit (11) for controlling the electric brake motor (13) in the event of a fault of the brake motor control device (24) is connected to the connection unit (28) of the brake motor control device (24).

7. Braking system according to Claim 6, **characterized in that** the auxiliary control unit (11) is assigned to an additional braking device or brake unit of the braking system and the auxiliary control unit (11) undertakes the control of the electric brake motor (13) as a supplementary function in the event of a fault of the brake motor control device (24).

8. Braking system according to Claim 7, **characterized in that** the auxiliary control unit (11) controls an actuator (10) of the hydraulic vehicle brake (1) as the main function.

9. Braking system according to Claim 8, **characterized in that** the auxiliary control unit (11) controls an electric brake booster (10) of the hydraulic vehicle brake (1) as the main function.

10. Braking system according to one of Claims 6 to 9, **characterized in that** the electromechanical braking device comprises two braking units each with an electric brake motor (13) and a common brake motor control device (24), wherein the auxiliary control unit (11) for controlling the electric brake motor (13) in the event of a fault of the brake motor control device (24) is connected via the connection unit (28) in the brake motor control device (24).

11. Braking system according to one of Claims 6 to 10, **characterized in that** the auxiliary control unit (11) is connected via plug connections (29) to the connection unit (28) of the brake motor control device (24).

12. Braking system according to one of Claims 6 to 11, **characterized in that** the auxiliary control unit (11) is connected via a network connection (30) to the connection unit (28) of the brake motor control device (24).

13. Method for controlling a brake motor control device according to one of Claims 1 to 5, in which an auxiliary control unit (11) connected to a connection unit (28) of the brake motor control device (24) takes over the control of the electric brake motor (13) in the event of a fault of the brake motor control device (24), in particular a fault in a microcontroller (25) of the brake motor control device (24) or a standard driver unit (26).

14. Method according to Claim 13, **characterized in that** the brake motor current is determined in a current measuring unit of the connection unit (28).

15. Method according to Claim 13 or 14, **characterized in that** the switching state of an actuating switch, by means of which the electromechanical braking device can be manually controlled by the driver, is detected in a detection unit (32) communicating with the connection unit (28).

## Revendications

1. Appareil de commande de moteur frein permettant de piloter un moteur frein électrique (13) d'un dispositif de freinage électromécanique qui peut être utilisé en particulier comme un frein de stationnement ou frein à main dans un système de freinage pour un véhicule, dans lequel le moteur frein électrique (13) déplace un piston de frein (16) contre un disque de frein (20),
**caractérisé en ce que** l'appareil de commande de moteur frein (24) est un appareil de commande ESP et l'appareil de commande de moteur frein (24) présente une unité de raccordement (28) à laquelle un appareil de commande auxiliaire (11) pour piloter le moteur frein électrique (13) en cas de défaillance de l'appareil de commande de moteur frein (24) peut être raccordé.

2. Appareil de commande de moteur frein selon la revendication 1, **caractérisé en ce qu'**un microcontrôleur (25) de l'appareil de commande de moteur frein (24) est relié à l'unité de raccordement (28) par une ligne de déblocage (31) pour débloquer l'unité de raccordement (28) en cas de défaillance.

3. Appareil de commande de moteur frein selon l'une quelconque des revendications 1 à 2, **caractérisé en ce que** l'unité de raccordement (28) présente une unité de mesure de courant.

4. Appareil de commande de moteur frein selon l'une quelconque des revendications 1 à 3, **caractérisé en ce que** l'unité de raccordement (28) présente une unité d'identification (32) pour détecter l'état de commutation d'un commutateur d'actionnement qui permet de commander le dispositif de freinage électromécanique.

5. Appareil de commande de moteur frein selon l'une quelconque des revendications 1 à 4, **caractérisé en ce que** l'unité de raccordement (28) est raccordée par l'intermédiaire d'une ou de plusieurs unités de raccordement (33) qui sont disposées entre une unité d'excitation standard (26) et une électronique de puissance (27) du moteur frein (13).

6. Système de freinage pour un véhicule pourvu d'un dispositif de freinage électromécanique qui peut être utilisé en particulier comme frein de stationnement ou frein à main, dans lequel le système de freinage présente un dispositif de frein de roue (9) pourvu d'un moteur frein électrique (13) qui déplace un piston de frein (16) contre un disque de frein (20), et comprenant un appareil de commande de moteur frein (24) pour piloter le moteur frein électrique (13) selon l'une quelconque des revendications 1 à 5,
**caractérisé en ce qu'**un appareil de commande auxiliaire (11) est raccordé à l'unité de raccordement (28) de l'appareil de commande de moteur frein (24) pour piloter le moteur frein électrique (13) en cas de défaillance de l'appareil de commande de moteur frein (24) .

7. Système de freinage selon la revendication 6, **caractérisé en ce que** l'appareil de commande auxiliaire (11) est associé à un dispositif de freinage ou à une unité de frein auxiliaire du système de freinage, et l'appareil de commande auxiliaire (11) prend en charge comme fonction complémentaire le pilotage du moteur frein électrique (13) en cas de défaillance de l'appareil de commande de moteur frein (24).

8. Système de freinage selon la revendication 7, **caractérisé en ce que** l'appareil de commande auxiliaire (11) pilote comme fonction principale un actionneur (10) du frein de véhicule hydraulique (1).

9. Système de freinage selon la revendication 8, **caractérisé en ce que** l'appareil de commande auxiliaire (11) pilote comme fonction principale un servofrein électrique (10) du frein de véhicule hydraulique (1).

10. Système de freinage selon l'une quelconque des revendications 6 à 9, **caractérisé en ce que** le dispositif de freinage électromécanique présente deux unités de frein pourvues respectivement d'un moteur frein électrique (13) et d'un appareil de commande de moteur frein (24) commun, dans lequel l'appareil de commande auxiliaire (11) pour piloter le moteur frein électrique (13) est raccordé par l'intermédiaire de l'unité de raccordement (28) dans l'appareil de commande de moteur frein (24) en cas de défaillance de l'appareil de commande de moteur frein (24).

11. Système de freinage selon l'une quelconque des revendications 6 à 10, **caractérisé en ce que** l'appareil de commande auxiliaire (11) est relié à l'unité de raccordement (28) de l'appareil de commande de moteur frein (24) par l'intermédiaire de fiches de raccordement (29).

12. Système de freinage selon l'une quelconque des revendications 6 à 11, **caractérisé en ce que** l'appareil de commande auxiliaire (11) est relié à l'unité de raccordement (28) de l'appareil de commande de moteur frein (24) par l'intermédiaire d'une liaison de réseau (30) .

13. Procédé de pilotage d'un appareil de commande de moteur frein selon l'une quelconque des revendications 1 à 5, dans lequel, en cas de défaillance de l'appareil de commande de moteur frein (24), en particulier en cas d'erreur dans un microcontrôleur (25) de l'appareil de commande de moteur frein (24) ou d'une unité d'excitation standard (26), un appareil de commande auxiliaire (11) raccordé à une unité de raccordement (28) de l'appareil de commande de moteur frein (24) prend en charge le pilotage d'un moteur frein électrique (13).

14. Procédé selon la revendication 13, **caractérisé en ce que** le courant de moteur frein est déterminé dans une unité de mesure de courant de l'unité de raccordement (28).

15. Procédé selon la revendication 13 ou 14, **caractérisé en ce que** dans une unité d'identification (32) en communication avec l'unité de raccordement (28), l'état de commutation d'un commutateur d'actionnement est détecté par lequel le dispositif de freinage électromécanique peut être commandé manuellement par le conducteur.
